# EUROPEAN PATENT SPECIFICATION

(11) **EP 3 546 169 B1**
(45) Date of publication and mention of the grant of the patent: **11.08.2021**
(21) Application number: 19164942.5
(22) Date of filing: 25.03.2019
(51) Int. Cl.: B29C 43/36, B21D 51/46, B29C 70/80, B29C 43/18, B29K 705/06, B29K 705/00, B29L 31/56

(54) **FORMING DEVICE FOR MAKING A SEALING ELEMENT FOR A CAP**
FORMVORRICHTUNG ZUR HERSTELLUNG EINES DICHTELEMENTS FÜR EINE KAPPE
DISPOSITIF DE FABRICATION D'UN ÉLÉMENT D'ÉTANCHÉITÉ POUR UN CAPUCHON

(30) Priority: 28.03.2018 IT 201800004055
(43) Date of publication of application: 02.10.2019
(73) Proprietor: PELLICONI & C. S.P.A., 40064 Ozzano dell'Emilia (BO) (IT)
(72) Inventor: NALDI, Doriano, 40064 Ozzano Dell'Emilia (Bologna) (IT); WHITE, Steven, Godmanchester PE29 2JD (GB)
(74) Representative: Milli, Simone

(56) References cited:
- EP-A2- 1 814 705
- JP-A- S62 135 165
- US-A- 3 038 624
- US-A- 3 278 985
- US-A- 4 094 460
- US-A- 4 398 875

## Description

The present invention relates to an internal sealing element for a cap, for example a crown cap, designed to be applied for closing a bottle.

In particular, this invention relates to a forming device used for moulding the element directly inside the cap.

According to the prior art, various types of caps, for example so-called crown caps, or screw caps, or other caps of different types, have been used for closing bottles, in particular glass bottles.

For simplicity and clarity of description, reference will be made below only to the crown cap, but it will be understood that the device described and claimed in this invention may also be applied in all those cases in which, irrespective of the type of a cap used, the inside of the latter comprises a sealing element of the type described below.

In its simplest embodiment, the crown cap is formed by a metal capsule which through a manual or pneumatic capping machine is gripped to the neck of the bottle. A sealing element designed to make a fluid tight seal of the cap on the neck of the bottle is usually located inside the capsule. The sealing element currently consists of a disc, approximately of the diameter of the bottom of the concavity of the capsule, or just less, made of plastic material and adhering to the inner surface of the capsule. An annular collar, slightly flared, designed to engage in a sealed fashion with the inner part of the neck of the bottle, extends from the disc.

This is, in particular, a cap wherein the sealing element simulates the presence of the so-called *"bidule",* the cup-shaped sealing element provided to collect sediments during the re-fermentation and fining step of the wine, for production according to the known Champenoise method. According to a specific embodiment, the making of the sealing element inside the capsule comprises positioning (inserting) on the bottom of the cavity formed by it a charge of plastic material (heated beforehand) and pressing the charge with a mould.

The action of pressing the mould determines the expansion of the charge of heated plastic material adhering to the inner wall of the capsule and thus filling the empty spaces left by the mould, thereby forming the sealing element.

Document EP1814705 discloses a cap for closing a container comprises a liner adhering to a wall of said cap, said liner comprising an annular zone suitable for engaging an edge of said container and an internal region arranged inside said annular zone, said liner furthermore comprising connecting path means between said annular zone and said internal region.

The aim of the invention is to provide means for making the internal element of the cap, in particular consisting of a device for making the element.

Another aim of the invention is to provide a device for making the internal element which is able to form the internal element easily and without causing the detachment of the disc from the bottom of the capsule. Another aim of the invention is to provide a device which allows the sealing element inside the cap to be made on a large-scale, in a relatively simple, efficient and inexpensive manner.

These aims and others are fully achieved by the forming device for making a sealing element inside a cap as characterised in the appended claims. The technical features and advantages of the invention are more apparent in the following description of a preferred but non-limiting embodiment of it. The description refers to the accompanying drawings, which are also provided purely by way of non-limiting example and in which:
- Figure 1a illustrates a crown cap provided with the sealing element according to the invention;
- Figure 1b illustrates a transversal cross-section of the cap of Figure 1a;
- Figure 2a illustrates the forming device in a relative first configuration and in two characteristic positions;
- Figure 2b illustrates the forming device in a relative second configuration and in two characteristic positions;
- Figures 3a and 3b illustrate a sequence of steps for making a crown cap according to this invention;
- Figure 4 illustrates a crown cap obtained following the production steps illustrated in Figures 3a and 3b in relation to its coupling with the neck of a bottle.

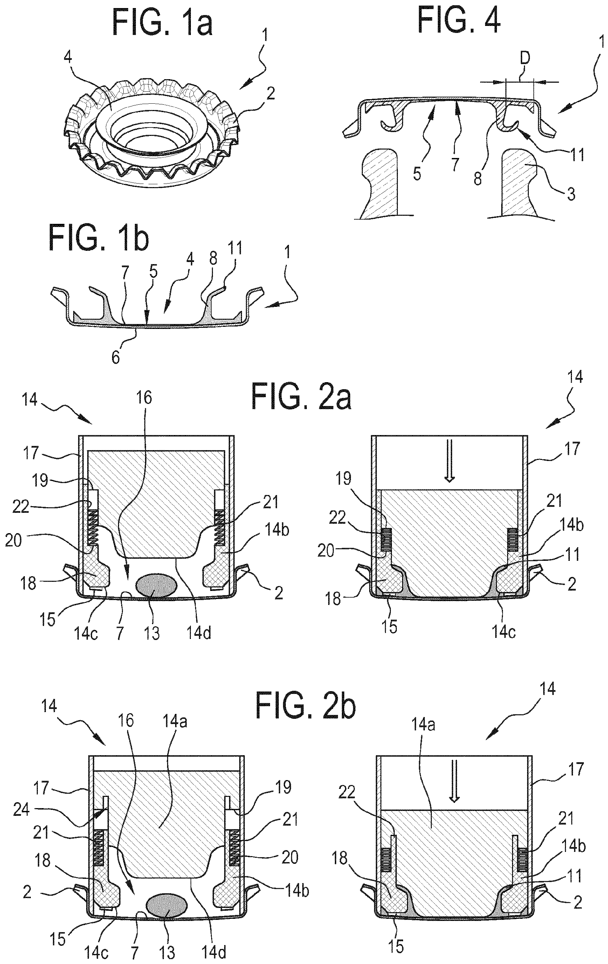

With reference to Figures 1a and 1b, the reference numeral 1 denotes a cap, for example but without limiting the scope of the crown type, for closing bottles for example of sparkling wines.

As mentioned in the introduction, for simplicity of description reference will be made to a cap of the crown type, but it must be understood that the forming device according to the invention may also be applied for caps of a different type, for example with a screw.

The cap 1 comprises a capsule 2 (made of metal) designed to be gripped to the neck 3 of a bottle (figure 4) in known manner, by means of a manual capping machine or pneumatic capping machine (both not illustrated). The cap 1 also comprises a sealing element 4, which is situated inside the concavity 5 of the capsule 2 and is cup-shaped.

For example, in its cup shape the sealing element 4 might perform the function of the so-called *'bidule'* in the context of the classic method of production of sparkling wines.

In detail, the sealing element 4 comprises a base 6, which is almost disc-shaped, adhering to and integral with the bottom 7 of the concavity 5 of the capsule 2, and by a collar 8, slightly flared, defined by a single annular flange 9 which extends from the base 6 for engaging in a sealed fashion with the inner part of the neck 3 of the bottle.

The base 6 is substantially circular and has a diameter that approximates the diameter of the bottom 7 of the concavity 5 of the capsule 2.

The outer surface of the flange 9, which has a substantially circular extension, is at a distance D from the outer surface of the base 6. Preferably, the distance D is between 15% and 50%, more preferably between 20% and 40%, even more preferably between 25% and 30%, of the diameter of the base 6.

In order to guarantee a firm and stable position of the sealing element 4 inside the concavity 5 of the capsule 2, a layer of paint is interposed between the bottom 7 and the sealing element 4. Preferably, the layer of paint is in the form of adhesive paint.

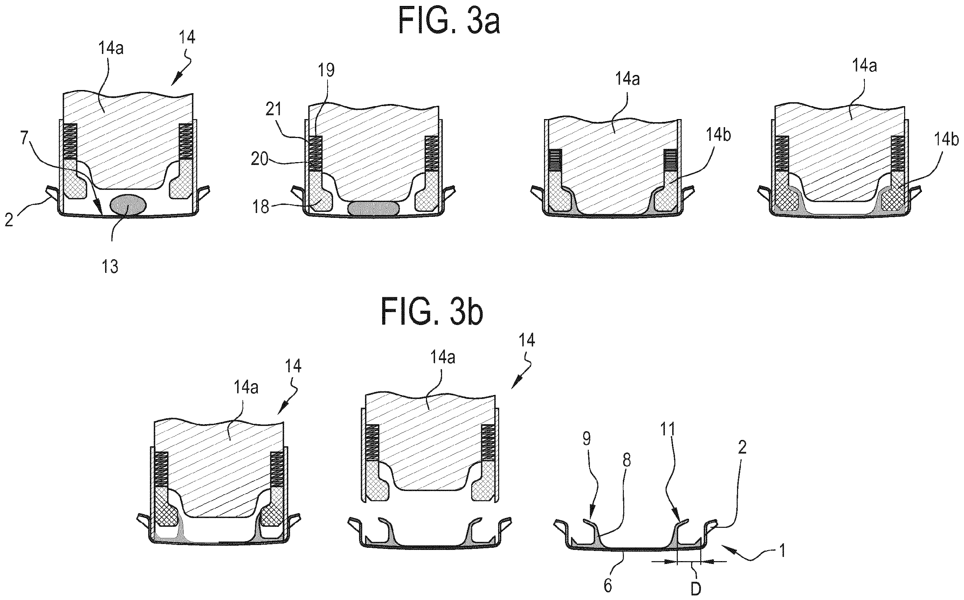

The sealing element 4 is shaped and constrained on the capsule 2 by inserting and moulding a plastic material directly inside the concavity 5 of the capsule 2, that is to say, on the bottom 7 of the concavity 5 of the capsule 2, after the bottom 7 has been coated with the above-mentioned layer of paint. The process is illustrated in Figures 3a and 3b.

More precisely, the production of the cap 1 comprises the steps of coating the bottom 7 of the concavity 5 of the capsule 2 with a layer of paint, and subsequently, as illustrated in Figures 3a and 3b, positioning (inserting) on the bottom 7 a charge 13 of plastic material (heated beforehand), pressing the charge 13 with a mould 14 for imparting to the charge 13 a preliminary shape to the sealing element 4 (figures 2a and 2b).

According to the invention, the mould used is identified on a forming device 14 for making the sealing element 4 comprising an axially movable punch 14a, and a forming ring 14b fitted outside on the punch 14a and slidable axially relative to it.

The support and movement part of the punch 14a is not illustrated in the accompanying drawings, as it can be easily inferred by an expert in the field.

Obviously, the movement of the punch will be determined by a suitable press (also not illustrated) and by actuating the moulding step of the sealing element 4 the capsule 2 will be located at the forming device, beneath the punch 14a and the forming ring 14b, already provided with the charge 13 of plastic material.

Both the punch 14a and the forming ring 14b are contained in a slidable fashion inside a tubular containment liner 17, designed to guide the axial movements of these two components and designed to introduce, with an overall axial movement, for example downwards, in the concavity 5 of the capsule 2.

The free head 14c of the forming ring 14b has an enlargement 18 having an extension towards the inside of the ring, which is designed to impart a curved shape towards the outside of the wall of the collar 8, as will become more evident from the following description, creating in this way the lip 11.

It should be noted that the enlargement 18 has a lobe-shaped cross-section and its thickness in a radial direction is such as to determine a predetermined distance D of the collar 8 from the outer periphery of the base 6.

Preferably, the thickness of the enlargement 18 is such as to determine a distance D which is between 15% and 50% of the diameter of the base 6.

The free end 14d of the punch 14a, on the other hand, has a narrowing of the section, in an axial direction, such that it corresponds to the extension towards the inside of the enlargement 18 of the forming ring 14b, when the end of the punch 14d is flush with the free head 14c of the forming ring.

It should be noted that the forming ring 14b is preloaded elastically in such a way as to remain offset towards the outside with the relative free head 14c with respect to the free end 14d of the punch 14a, under non-operating conditions, in particular when the punch 14a is far from the bottom 7 of the concavity 5.

The elastic pre-loading of the ring forming is obtained by means of one or more springs 21 arranged between corresponding opposing shoulders 19, 20 of the punch 14a and of the forming ring 14b (Figures 2a, 2b and 3a, 3b).

In this case two different configurations are possible. In a first configuration, illustrated in Figure 2a, the spring or springs 21 are located around the punch 14a and are contained inside corresponding walls 22 which extend from the forming ring 14b, in such a way that they remain interposed between the latter and the punch.

The shoulder of the forming ring 20 is formed towards the inside of it, in a radial direction, whilst the shoulder of the punch 19 extends outwards. The spring, or the springs 21, are inserted between the two shoulders, under the shoulder of the punch 19 and above the shoulder of the forming ring.

In the second configuration, illustrated in Figure 2b, the spring or the springs 21 are positioned around the corresponding walls 22 of the forming ring 14b surrounding the punch 14a, and are contained in the liner 17 interposed between the latter and the walls 22, again below the shoulder of the punch 19.

However, the second configuration requires the provision of an annular cavity 24, that is to say, a seat, around the punch 14a which allows the wall 22 to slide upwards beyond the shoulder of the punch, inserting inside the cavity.

A series of spacer sectors 15 are applied on the free head 14c of the forming ring 14b so as to leave a predetermined distance, corresponding to their thickness, between the free head of the forming ring 14b and the bottom 7 of the concavity 5 when the punch 14a and the forming ring 14b are in the compression position of the charge 13 (second image of Figure 2b), as described in more detail below.

The operation of the forming device 14 according to the invention occurs according to the above description.

In the operating position, the punch 14a is raised and the forming ring 14b is moved axially under the thrust of the elastic reaction of the springs 21, in such a way that the relative free end face 14c is offset outwards with respect to the free end 14d of the punch 14a.

On the bottom 7 of the concavity 5 of the capsule 2 is firstly applied a layer of adhesive paint, designed to remain interposed between the bottom 7 and the sealing element 4 being formed, in order to keep the latter joined to the capsule 2.

A charge of plastic material 13 is placed on the bottom 7 when the capsule is below the forming device 14, or immediately before.

The punch 14a - forming ring 14b - liner 17 assembly is actuated, causing the progressive lowering and the introduction in the concavity 5 of the capsule 2.

The lower part of the liner 17 is very close to the walls of the capsule 2 and stops when in contact with the bottom 7 of the concavity 5, adhering on the circumference as external as possible.

Under the pushing action of the springs 21, the forming ring 14b also moves downwards, along with the movement, again downwards, of the punch 14a, until the spacer sectors 15 applied on the free head 14e of the forming ring 14b come into contact with the base 7.

At this point the forming ring 14b stops, surrounding the charge of plastic material 13, whilst the punch 14a continues its stroke downwards, compressing the springs 21 and, with the head 14d, the charge of plastic material 13.

The plastic material, under the pushing action of the punch 14a, expands in the forming chamber 16 delimited by the bottom 7 of the concavity 5, by the lobe-shaped enlargement 18 of the forming ring 14b, and by the free end 14d of the punch, with a narrow section, thereby forming the sealing element 4.

In particular, the plastic material is introduced into the free space left between the free head 14c of the forming ring 14b and the bottom 7 thanks to the presence of the spacer sectors 15 until reaching the wall of the capsule 2, and between the enlargement 18 in the form of a lobe and the punch 14a, forming the lip 11 of the sealing element 4.

Once the sealing element 4 has been formed, the punch 14a reverses the direction of its movement and rises. During the initial step of the movement upwards, the springs 21 react elastically pushing the forming ring 14b downwards and keeping pressed against the bottom 7 until the head 14d of the punch is moved above the lobe-shaped enlargement 18. At that point, the springs 21 are completely extended and the forming ring 14b also rises.

The fluidity which still characterises the plastic material determines the closing of the grooves left on the bottom of the sealing element 4 by the spacer sectors 15, re-establishing the capacity for the cap to create the seal on the neck of the bottle.

This splitting of the movement of the punch - forming ring assembly allows the extraction, which would otherwise be impossible, of the lip 11 from the space between lobe-shaped enlargement 18 and the punch 14a.

In short, during its action, the forming device 14 releases the sealing element 4 firstly in a central region of the sealing element 4, inside the flange 9 and corresponding to the punch 14a, and then in an annular region, outside the flange 9, corresponding to the lobe-shaped enlargement 18 of the forming ring 14b.

After the cap 1 illustrated in Figure 4 has been obtained, according to the steps described above, the latter is, if necessary, sent to further completion and packaging steps for the subsequent introduction on the market.

The shape and the operating sequence which characterise the forming device 14 described here allow the preset aims in the introduction to be achieved, that is to say, to provide means for making the sealing element inside the cap which operates easily and without causing the detachment of the disc from the bottom of the capsule and which allows the making of the sealing element inside the cap on a large-scale in a relatively simple, efficient and inexpensive manner.

## Claims

1. Forming device for making an internal sealing element (4) for a metal cap (1) used to close a bottle, said cap comprising a metal capsule (2) and a sealing element (4) that is located inside the concavity (5) of the capsule (2) and consists of an approximately disk-shaped base (6), which base is joined in adherence to the bottom of the concavity (5) and from which base a cup shaped collar (8) extends, the collar being defined by a single annular flange (9) extending from the base (6), said sealing element (4) being made by inserting and molding a charge (13) of plastic material resting on the bottom of the concavity (5); said device (14) comprising:
a punch (14a) that is movable axially, with the capsule (2) being placed, already provided with the charge (13) of plastic material, at an area corresponding to the punch;
a forming ring (14b) externally fitted on the punch (14a) and sliding axially with respect to the punch (14a), the ring being elastically preloaded so as to remain offset towards the outside with its free head (14c) with respect to the free end (14d) of the punch (14a) when said punch (14a) is located far from the bottom (7) of the concavity (5);
a series of spacer sectors (15) applied on the free head (14e) of the forming ring (14b), aimed at keeping said free head at a distance from the bottom (7) of the concavity (5) when the punch (14a) is in a position to compress the charge (13) of plastic material and when the free head (14e) of the forming ring (14b) is moved to surround the free end (14d) of the punch, for making a forming chamber (16), the forming device being **characterized in that** said elastic preloading is obtained by means of one or more springs (21) which are arranged between corresponding opposing shoulders (19, 20) of said punch (14a) and of said forming ring (14b).

2. Device according to claim 1, wherein said punch (14a) and the forming ring (14b) are contained slidingly inside a tubular containment liner(17), that is adapted to enter into the concavity (5) of said capsule (2).

3. Device according to claim 1 or 2, wherein the free head (14e) of said forming ring (14b) has an enlargement (18) that develops inwards and is designed to impart an outwardly curved shape to the collar wall (8).

4. Forming device according to claim 3, wherein said enlargement (18) has a lobe-shaped section and is located at the free head (14e).

5. Forming device according to claim 3 or 4, wherein the radial thickness of said enlargement (18) of the head of the forming ring (14b) corresponds to a predetermined distance (D) of the collar (8) from the outer periphery of the base (6) itself.

6. Forming device according to claim 5, wherein said distance (D) is between 15% and 50% of the diameter of said base (6).

7. Device according to any of the preceding claims, wherein said one or more springs (21) are arranged around said punch (14a) and are contained within corresponding walls (22) of said forming ring (14b) interposed between the latter and said punch.

8. Device according to claim 7, wherein said one or more springs (21) are arranged around corresponding walls (22) of said forming ring (14b) which extend around the punch (14a) and are contained within said liner (17), interposed between the latter and said walls (22).

9. Device according to any one of claims 1 to 8, wherein said free head (14d) of said punch (14a) has a section narrowing in the axial direction, such as to make it correspond to the extension towards the inside of the enlargement (18) of said forming ring (14b).

## Patentansprüche

1. Formvorrichtung zur Herstellung eines inneren Dichtelements (4) für eine Metallkappe (1), die zum Verschließen einer Flasche verwendet wird, wobei die Kappe eine Metallkapsel (2) und ein Dichtelement (4) umfasst, das sich innerhalb der Konkavität (5) der Kapsel (2) befindet und aus einer etwa scheibenförmigen Basis (6) besteht, wobei die Basis mit dem Boden der Konkavität (5) haftend zusammengefügt ist und von der aus sich ein becherförmiger Kragen (8) erstreckt, wobei der Kragen durch einen einzigen ringförmigen Flansch (9) definiert ist, der sich von der Basis (6) erstreckt, wobei das Dichtelement (4) durch Einfügen und Ausformen einer Ladung (13) aus Kunststoffmaterial hergestellt wird, die auf dem Boden der Konkavität (5) ruht; wobei die Vorrichtung (14) umfasst:
einen axial beweglichen Stempel (14a), wobei die Kapsel (2), die bereits mit der Ladung (13) aus Kunststoffmaterial versehen ist, an einem dem Stempel entsprechenden Bereich angeordnet ist;
einen außen auf den Stempel (14a) aufgesetzten und gegenüber dem Stempel (14a) axial gleitenden Formring (14b), wobei der Ring elastisch vorgespannt ist, um mit seinem freien Kopf (14c) gegenüber dem freien Ende (14d) des Stempels (14a) nach außen versetzt zu bleiben, wenn der Stempel (14a) weit vom Boden (7) der Konkavität (5) entfernt ist;
eine Reihe von Abstandssektoren (15), die auf dem freien Kopf (14e) des Formrings (14b) angebracht sind, um den freien Kopf in einem Abstand vom Boden (7) der Konkavität (5) zu halten, wenn der Stempel (14a) sich in einer Position befindet, um die Ladung (13) aus Kunststoffmaterial zu komprimieren, und wenn der freie Kopf (14e) des Formrings (14b) bewegt wird, um das freie Ende (14d) des Stempels zu umgeben, um eine Formkammer (16) zu bilden, wobei die Formvorrichtung **dadurch gekennzeichnet ist, dass** die elastische Vorspannung durch eine oder mehrere Federn (21) erreicht wird, die zwischen entsprechenden gegenüberliegenden Schultern (19, 20) des Stempels (14a) und des Formrings (14b) angeordnet sind.

2. Vorrichtung nach Anspruch 1, wobei der Stempel (14a) und der Formring (14b) gleitend in einer röhrenförmigen Aufnahmeauskleidung (17) enthalten sind, die ausgelegt ist, um in die Konkavität (5) der Kapsel (2) einzutreten.

3. Vorrichtung nach Anspruch 1 oder 2, wobei der freie Kopf (14e) des Formrings (14b) eine sich nach innen erstreckende Ausdehnung (18) aufweist, die bestimmt ist, um der Kragenwand (8) eine nach außen gewölbte Form zu verleihen.

4. Formvorrichtung nach Anspruch 3, wobei die Ausdehnung (18) einen lappenförmigen Sektor aufweist und sich am freien Kopf (14e) befindet.

5. Formvorrichtung nach Anspruch 3 oder 4, wobei die radiale Dicke der Ausdehnung (18) des Kopfes des Formrings (14b) einem vorbestimmten Abstand (D) des Kragens (8) vom Außenumfang der Basis (6) entspricht.

6. Formvorrichtung nach Anspruch 5, wobei der Abstand (D) zwischen 15 % und 50 % des Durchmessers der Basis (6) liegt.

7. Vorrichtung nach einem der vorhergehenden Ansprüche, wobei die eine oder die mehreren Federn (21) um den Stempel (14a) herum angeordnet sind und innerhalb entsprechender Wände (22) des Formrings (14b) enthalten sind, die zwischen den letzteren und dem Stempel angeordnet sind.

8. Vorrichtung nach Anspruch 7, wobei die eine oder die mehreren Federn (21) um entsprechende Wände (22) des Formrings (14b) herum angeordnet sind, die sich um den Stempel (14a) erstrecken und innerhalb der Auskleidung (17) enthalten sind, die zwischen der letzteren und den Wänden (22) angeordnet sind.

9. Vorrichtung nach einem der Ansprüche 1 bis 8, wobei der freie Kopf (14d) des Stempels (14a) einen sich in axialer Richtung verjüngenden Sektor aufweist, damit er der Erstreckung nach innen der Ausdehnung (18) des Formrings (14b) entspricht.

## Revendications

1. Dispositif de formage pour la fabrication d'un élément d'étanchéité interne (4) pour un bouchon métallique (1) utilisé pour fermer une bouteille, ledit bouchon comprenant une capsule métallique (2) et un élément d'étanchéité (4) étant situé à l'intérieur de la concavité (5) de la capsule (2) et consistant en une base (6) approximativement discoïdale, ladite base est jointe par adhérence au fond de la concavité (5) et de ladite base se prolonge un collier (8) en forme de tasse, le collier étant défini par une bride annulaire (9) unique se prolongeant à partir de la base (6), ledit élément d'étanchéité (4) étant réalisé en introduisant et en moulant une charge (13) de matière plastique reposant sur le fond de la concavité (5) ; ledit dispositif (14) comprenant :
un poinçon (14a) étant mobile axialement, la capsule (2) étant placée, déjà pourvue de la charge (13) de matière plastique, en correspondance d'une zone correspondant au poinçon ;
un anneau de formage (14b) monté extérieurement sur le poinçon (14a) et coulissant axialement par rapport au poinçon (14a), l'anneau étant préchargé élastiquement de manière à rester décalé vers l'extérieur avec sa tête libre (14c) par rapport à l'extrémité libre (14d) du poinçon (14a) lorsque ledit poinçon (14a) est situé loin du fond (7) de la concavité (5) ;
une série de secteurs d'écartement (15), appliqués sur la tête libre (14e) de l'anneau de formage (14b), destinés à maintenir ladite tête libre à une certaine distance du fond (7) de la concavité (5) lorsque le poinçon (14a) est en position de comprimer la charge (13) de matière plastique et lorsque la tête libre (14e) de l'anneau de formage (14b) est déplacée pour entourer l'extrémité libre (14d) du poinçon, pour réaliser une chambre de formage (16), le dispositif de formage étant **caractérisé en ce que** ladite précharge élastique est obtenue au moyen d'un ou plusieurs ressorts (21) étant disposés entre des épaulements opposés (19, 20) correspondants dudit poinçon (14a) et dudit anneau de formage (14b).

2. Dispositif selon la revendication 1, dans lequel ledit poinçon (14a) et l'anneau de formage (14b) sont contenus de manière coulissante à l'intérieur d'une chemise de contenance tubulaire (17) étant adaptée pour entrer dans la concavité (5) de ladite capsule (2).

3. Dispositif selon la revendication 1 ou 2, dans lequel la tête libre (14e) dudit anneau de formage (14b) comporte un élargissement (18) se développant vers l'intérieur et étant conçu pour conférer une forme incurvée vers l'extérieur à la paroi du collier (8).

4. Dispositif de formage selon la revendication 3, dans lequel ledit élargissement (18) comporte une section en forme de lobe et est situé en correspondance de la tête libre (14e).

5. Dispositif de formage selon la revendication 3 ou 4, dans lequel l'épaisseur radiale dudit élargissement (18) de la tête de l'anneau de formage (14b) correspond à une distance prédéterminée (D) du collier (8) à partir de la périphérie extérieure de la base (6) elle-même.

6. Dispositif de formage selon la revendication 5, dans lequel ladite distance (D) résulte comprise entre 15 et 50 % du diamètre de ladite base (6).

7. Dispositif selon l'une quelconque des revendications précédentes, dans lequel lesdits un ou plusieurs ressorts (21) sont disposés autour dudit poinçon (14a) et sont contenus à l'intérieur des parois correspondantes (22) dudit anneau de formage (14b) interposés entre ces dernières et ledit poinçon.

8. Dispositif selon la revendication 7, dans lequel lesdits un ou plusieurs ressorts (21) sont disposés autour des parois (22) correspondantes dudit anneau de formage (14b) qui se prolongent autour du poinçon (14a) et sont contenus à l'intérieur de ladite chemise (17) interposés entre cette dernière et lesdites parois (22).

9. Dispositif selon l'une quelconque des revendications 1 à 8, dans lequel ladite tête libre (14d) dudit poinçon (14a) comporte une section se rétrécissant dans la direction axiale, de manière à la faire correspondre à l'extension vers l'intérieur de l'élargissement (18) dudit anneau de formage (14b).
